# EUROPEAN PATENT APPLICATION

(11) **EP 4 811 759 A1**
(43) Date of publication of application: **23.09.2026**
(21) Application number: 25164861.4
(22) Date of filing: 19.03.2025
(51) Int. Cl.: H04N 1/00, G06F 3/12

(54) **IMAGE FORMING APPARATUS**

(71) Applicant: Toshiba TEC Kabushiki Kaisha, Tokyo 141-8562 (JP)
(72) Inventor: Uchida, Shigeo, Tokyo, 141-8562 (JP)
(74) Representative: Bandpay & Greuter

(57) **Abstract**

According to one embodiment, an image forming apparatus includes a storage device for storing a first built-in application to perform a first function, a second built-in application to perform a second function, and a web server application associated with the second built-in application. The apparatus further includes a processor and an operation panel to receive user selections. The processor is configured to receive instructions to execute the first built-in application and the second built-in application in conjunction with first built-in application, execute the first built-in application to perform the first function, activate the web server application associated with the second built-in application, and then, after activating the web server application, execute the second built-in application to perform the second function. (Figure 1)

## Description

### FIELD

Embodiments described herein relate generally to an image forming apparatus.

### BACKGROUND

Because an MFP (multi-function peripheral) has a plurality of different functions, certain MFPs will have a plurality of different built-in applications (or "apps") installed or associated therewith. Some built-in applications may operate as, or in conjunction with, web server software. In the following, web server software may be simply referred to as an operation or an application of a "Web server." An application operating on a Web server may be referred to as a web application, web software, or a web-based application. In some instances, built-in applications of an MFP may be assigned specific web server software to cooperate with to achieve certain functions. In the related art, the MFP performs the activating of a web server software only upon receiving a web application activation request from an operator (user) of the MFP.

When the number of activated web applications increases, the number of activated web server software also increases, and thus memory usage increases. In order to avoid this, generally, an upper limit is set for the number of web server software instances that may be simultaneously activated, and once the upper limit is exceeded, previously activated web server software instances are stopped, starting with the oldest (longest activated) activated web server software.

### BRIEF DESCRIPTION OF THE DRAWINGS

FIG. 1 is a diagram of an image forming apparatus according to an embodiment.
FIG. 2 is a flowchart of an operation example of an image forming apparatus according to an embodiment.
FIG. 3 depicts a processing flow of an operation example.

### DETAILED DESCRIPTION

In general, embodiments provide an image forming apparatus for which the processing time for a cooperative operation between a web application and a web server is shortened.

According to one embodiment, an image forming apparatus includes a storage device for storing a first built-in application to perform a first function, a second built-in application to perform a second function, and a web server application associated with the second built-in application. The apparatus further includes a processor and an operation panel to receive user selections. The processor is configured to receive instructions to execute the first built-in application and the second built-in application in conjunction with first built-in application, execute the first built-in application to perform the first function, activate the web server application associated with the second built-in application, and then, after activating the web server application, execute the second built-in application to perform the second function.

### Image Forming Apparatus

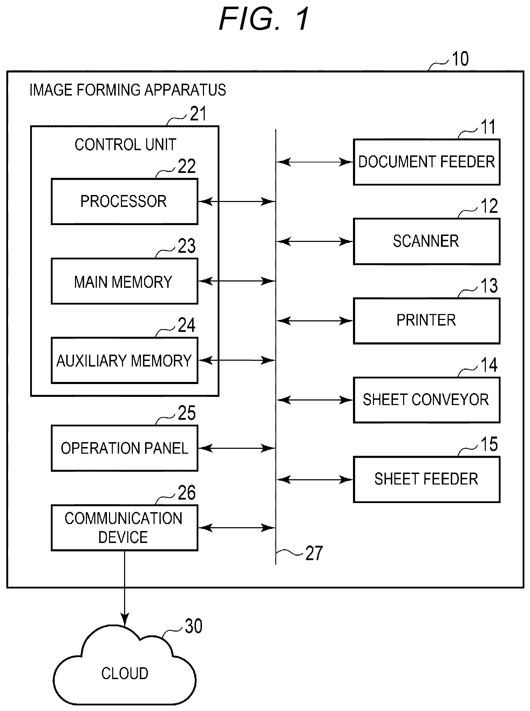

First, an image forming apparatus 10 according to an embodiment will be described with reference to FIG. 1. FIG. 1 is a diagram schematically showing a configuration example of the image forming apparatus 10.

The image forming apparatus 10 is, for example, a multifunction peripheral (MFP). The image forming apparatus 10 has a printing function, a scanning function, a copying function, and the like. The printing function involves forming a toner image on a sheet of paper or the like. The scanning function involves reading an image from a document or the like. The copying function involves reading an image from a document or the like using the scanning function then printing the image on a sheet of paper or the like using the printing function.

The image forming apparatus 10 includes a document feeder 11, a scanner 12, a printer 13, a sheet conveyor 14, a sheet feeder 15, a control unit 21, an operation panel 25, a communication device 26, and a system bus 27.

The document feeder 11 can be an auto document feeder (ADF). The document feeder 11 feeds a document placed on a document tray to the scanner 12.

The scanner 12 reads an image from a document. The scanner 12 includes, for example, a document glass (platen) and a reading module. The reading module reads the image from a document that has been placed on the document glass or a document that is fed to the document glass by the document feeder 11. The reading module irradiates the document to be read with illumination light and receives reflected light at an image sensor to convert the reflected light into a digital signal. Accordingly, the reading module reads the image from the document. An additional reading module or a component thereof may be provided within the document feeder 11 or the like to read an image from a back side of the document.

The sheet feeder 15 supplies a sheet to the sheet conveyor 14. For example, the sheet feeder 15 includes one or more sheet feeding cassettes that store sheets on which images are to be printed. The sheet feeder 15 includes a manual feed tray for manually feeding a sheet. The sheet feeder 15 selectively picks up a sheet from either the sheet feeding cassette or the manual feed tray with a sheet feeding roller and supplies the sheet to the sheet conveyor 14.

The sheet conveyor 14 conveys the sheet supplied from the sheet feeder 15 through the printer 13. The sheet conveyor 14 can include a duplex unit that enables the printer 13 to perform printing on both sides of the sheet. The duplex unit flips the sheet by switching back the sheet, and conveys the flipped sheet through the printer 13. The sheet conveyor 14 also has a sheet output tray that receives a sheet on which an image has been printed by the printer 13.

The printer 13 prints an image on the sheet conveyed by the sheet conveyor 14 based on image data as supplied. The image data supplied for printing can be image data read from a document by the scanner 12. Alternatively, the image data can be image data supplied to the image forming apparatus 10 from an external device or the like.

For example, the printer 13 prints an image on the sheet by forming a toner image on a transfer belt and then transfers the toner image onto a sheet. Alternatively, the printer 13 prints the image on a sheet by ejecting an ink onto the sheet using an inkjet head. The printer 13 is not limited to these examples and may print the image on the sheet by any other method.

The operation panel 25 is a user interface for the inputting and outputting of information between the image forming apparatus 10 and an operator of the image forming apparatus 10. The operation panel 25 includes, for example, a touch panel and/or an input device such as buttons or keypads.

The touch panel is formed by stacking a display such as a liquid crystal display or an organic EL display and a touch sensitive device. The touch panel displays a screen for notifying the operator of the image forming apparatus 10 of various kinds of information. The touch panel receives a touch operation performed by the operator. That is, the touch panel is an input and output device.

The input device receives an input operation performed by the operator. The input device may be or include a keyboard, a keypad, a touchpad, and the like.

The communication device 26 includes a communication interface, for example, a network interface card. The communication device 26 connects to a cloud 30 (e.g., a cloud network environment or the like). The communication device 26 communicates with the cloud 30 via a wired or wireless network, such as a local area network (LAN). For example, the communication device 26 transmits the image data read by the scanner 12 to the cloud 30, and the cloud 30 stores the received image data.

The system bus 27 is a communication path connecting the document feeder 11, the scanner 12, the printer 13, the sheet conveyor 14, the sheet feeder 15, the control unit 21, the operation panel 25, and the communication device 26. The document feeder 11, the scanner 12, the printer 13, the sheet conveyor 14, the sheet feeder 15, the control unit 21, the operation panel 25, and the communication device 26 can transmit and receive information, data, a control signal, a command, a response, and the like via the system bus 27.

The control unit 21 controls the document feeder 11, the scanner 12, the printer 13, the sheet conveyor 14, the sheet feeder 15, the operation panel 25, and the communication device 26 to execute various functions of the image forming apparatus 10. The control unit 21 includes a processor 22, a main memory 23, and an auxiliary memory 24.

The processor 22 can be a calculation (arithmetic) element that executes calculation processing. The processor 22 controls each unit to execute various functions of the image forming apparatus 10 according to an operating system and/or application software that may be stored in the main memory 23 or the auxiliary memory 24. The processor 22 can be or include, for example, a central processing unit (CPU) or a graphic processing unit (GPU).

The main memory 23 includes, for example, a read only memory (ROM) and a random access memory (RAM).

The ROM is a non-volatile memory. The ROM non-volatilely stores, for example, an operating system and an application to be executed by the processor 22. Hereinafter, for convenience, the operating system and the application may also be more simply referred to singularly or collectively as a program. The ROM may store data necessary for executing a program.

The RAM is a volatile memory. The RAM temporarily stores, for example, a program to be executed by the processor 22 and data necessary for executing the program.

The auxiliary memory 24 can be a non-volatile memory such as a hard disk drive (HDD) or a solid-state drive (SSD). The auxiliary memory 24 can non-volatilely store the program(s) to be executed by the processor 22 and the data necessary for executing the program. The programs stored in the auxiliary memory 24 can include, for example, a built-in application for executing a predetermined function of the image forming apparatus 10 and/or web server software assigned to a built-in application.

The processor 22 reads the program(s) stored in the ROM of the main memory 23 and the auxiliary memory 24 and the data necessary for executing the program(s) into the RAM of the main memory 23, and executes the program(s) to execute various functions of the image forming apparatus 10.

### Operation Example

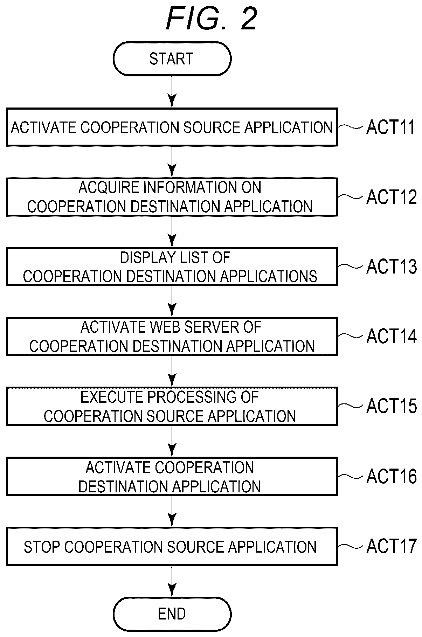

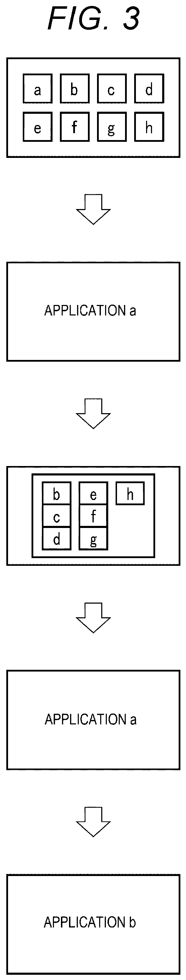

Next, an operation example of the image forming apparatus 10 according to an embodiment will be described with reference to FIGS. 2 and 3. FIG. 2 is a flowchart of the operation example of the image forming apparatus 10. FIG. 3 depicts a processing flow of an operation example of the image forming apparatus 10 in a graphical schematic manner. In FIGS. 2 and 3, the relevant built-in application is referred to as an application.

An example will be described in which the operator of the image forming apparatus 10 performs a selection of a built-in application by using the touch panel of the operation panel 25 to cause the image forming apparatus 10 to execute a desired function.

To cause the image forming apparatus 10 to execute the desired function, the operator (user) of the image forming apparatus 10 operates the operation panel 25 to perform a selection operation to select an application for executing the desired function. The application selected in the selection operation in this example may be referred to as a cooperation source application, a primary function application, or a primary application. An application that operates in cooperation with the cooperation source application may be referred to as a cooperation destination application, a cooperating application, a secondary function application, or a secondary application.

As depicted in the first (initial) stage in FIG. 3, a list of the cooperation source applications is displayed on the touch panel of the operation panel 25 or the like. The operator then performs a selection operation to select a desired cooperation source application from among the displayed options by a touch operation. Here, it is assumed that the operator-selected cooperation source application is "APPLICATION a," which an application that executes the scanning function. In this example, the cooperating application associated with the "APPLICATION a" is "APPLICATION b," which is an application that executes a storage function for storing a scanned image in the cloud 30.

The operator performs the selection operation by pressing or otherwise selecting an icon of the desired cooperation source application (primary application) by a touch operation or the like via the operation panel 25.

After receiving a selection operation for "APPLICATION a," the image forming apparatus 10 activates the cooperation source "APPLICATION a" in ACT11 (see FIG. 2). Specifically, for this example, the processor 22 begins to activate the "APPLICATION a" by loading the application (the cooperation source application in this context) from the auxiliary memory 24 into the main memory 23. For example, as shown in a second stage in FIG. 3, the icon, name, or the like of the selected cooperation source application ("APPLICATION a") is displayed on the operation panel 25.

Next, in ACT12, the image forming apparatus 10 acquires information about the cooperation destination (secondary) application(s) that can cooperate with or operate in conjunction with the selected "APPLICATION a." For example, the information about the associated secondary application(s) that can cooperate with each possible cooperation source (primary) application is stored in advance in the auxiliary memory 24 of the control unit 21, and the processor 22 reads this information from the auxiliary memory 24 into the main memory 23 to acquire the relevant information for the selected cooperation source (primary) application.

In ACT13, and as shown in the third stage of FIG. 3, the image forming apparatus 10 displays a list of possible cooperation destination applications (secondary applications) on the operation panel 25, and waits for an operator (user) selection of a desired cooperation destination application by a touch operation or the like. In this example, the operator selects an icon of the cooperation destination application "APPLICATION b."

After receiving the selection of "APPLICATION b," the image forming apparatus 10 activates, in ACT14, the Web server assigned to "APPLICATION b." Specifically, the processor 22 of control unit 21 activates the Web server assigned to "APPLICATION b" by loading the assigned Web server software stored in the auxiliary memory 24 into the main memory 23. That is, the processor 22 activates the Web server software before activating the "APPLICATION b" itself.

In ACT15, the image forming apparatus 10 executes the processing of the previously selected cooperation source (primary) application ("APPLICATION a"). Accordingly, the image forming apparatus 10 executes the scanning function. For example, in order to indicate that the processing of "APPLICATION a" is being executed, the icon or the like of the cooperation source application ("APPLICATION a") is displayed on the operation panel 25 as shown in a fourth stage of FIG. 3.

After the web server software is activated, the image forming apparatus 10 then activates the selected cooperation destination (secondary) application ("APPLICATION b") in ACT16. Specifically, the processor 22 of the control unit 21 activates "APPLICATION b" by loading the application from the auxiliary memory 24 into the main memory 23. For example, in order to indicate that the cooperation destination application ("APPLICATION b") is being activated, the icon or the like for this application is displayed on the operation panel 25 as shown as the last stage of FIG. 3.

After the processing of "APPLICATION a" is completed, that is, in this example, after the execution of the scanning function is completed, the image forming apparatus 10 ultimately stops (closes or ends) "APPLICATION a" in ACT17. However, the image forming apparatus 10 in this example also executes the processing of the cooperation destination ("APPLICATION b"). Accordingly, in this example, the image forming apparatus 10 executes a storage function processing for storing the scanned image (result from processing of "APPLICATION a") in the cloud 30.

In the present example, the operator specifically performs a user selection of the cooperation source application to cause the image forming apparatus 10 to execute a function. However, in other examples, instead of performing a specific selection of a cooperation source application, the operator may instruct the image forming apparatus 10 to execute a desired function by more simply instructing the execution of the desired function on operation panel 25. That is, rather than selecting a particular application that performs a function (e.g., scanning), the operator may merely select the function "scanning" without reference to a specific underlying application that performs the function.

### Effects

In the image forming apparatus 10 according to an embodiment, the processor 22 executes the cooperation source (primary) application and the cooperation destination (secondary) application in conjunction with each other. Accordingly, it may be possible to execute functions that are not available on the image forming apparatus 10 operating alone. For example, by executing the cooperation source application ("APPLICATION a") and the cooperation destination application ("APPLICATION b") in conjunction with each other, the image forming apparatus 10 can execute the scanning function and then store the scanned image in the cloud 30.

In the embodiment, the image forming apparatus 10 activates the web server software assigned to a built-in application (e.g., "APPLICATION b") before activating the built-in application to perform the desired function. Therefore, the processing time of the cooperative operation between the built-in application and its web server software is shortened.

While certain embodiments have been described, the embodiments have been presented by way of example, and are not intended to limit the scope of the disclosure. These novel embodiments can be implemented in various other forms, and various omissions, substitutions, and modifications can be made without departing from the gist of the disclosure. The embodiments and the modifications thereof are included in the scope and the gist of the disclosure, and are included in the scope of the disclosure disclosed in the claims and equivalents thereof.

## Claims

1. An image forming apparatus, comprising:
a storage device storing a first built-in application for performing a first function, a second built-in application for performing a second function, and a web server application associated with the second built-in application;
an operation panel configured to receive user selections; and
a processor configured to:
receive instructions to execute the first built-in application and the second built-in application in conjunction with first built-in application;
execute the first built-in application to perform the first function;
activate the web server application associated with the second built-in application; and
after activating the web server application, execute the second built-in application to perform the second function.

2. The image forming apparatus according to claim 1, wherein
the operation panel comprises a touch panel display, and
the processor is configured to display a selectable list of built-in applications on the touch panel display.

3. The image forming apparatus according to claim 2, wherein the instructions for executing the first built-in application and the second built-in application are provided by one or more user selections made via the touch panel display.

4. The image forming apparatus according to claim 3, wherein the processor is configured to end execution of the first built-in application after beginning execution of the second built-in application.

5. The image forming apparatus according to claim 4, wherein the first function is a document scanning function.

6. The image forming apparatus according to claim 5, wherein the second function is a storing of a file resulting from execution of the first built-in application on a cloud-based storage device.

7. The image forming apparatus according to any one of claims 1 to 6, further comprising:
a communication interface connectable to a cloud-based environment.

8. The image forming apparatus according to any one of claims 1 to 7, wherein the processor is configured to end execution of the first built-in application after beginning execution of the second built-in application.

9. The image forming apparatus according to any one of claims 1 to 8, wherein the first function is a document scanning function.

10. The image forming apparatus according to claim 9, wherein the second function is a storing of a file resulting from execution of the first built-in application on a cloud-based storage device.

11. The image forming apparatus according to any one of claims 1 to 10, wherein the image forming apparatus is a multi-functional peripheral device.

12. The image forming apparatus according to claim 11 further comprising a scanner, a printer and a system bus wherein each of the scanner and the printer is configured to transmit and receive information, data, a control signal, a command, and a response via the system bus.

13. The image forming apparatus according to any one of claims 6 to 12 further comprising a communication device configured to be connected to a cloud-based storage device.

14. The image forming apparatus according to claim 13, wherein the communication device is connected to each of the scanner and the printer via the system bus.
